# EUROPEAN PATENT SPECIFICATION

(11) **EP 2 889 521 B1**
(45) Date of publication and mention of the grant of the patent: **21.02.2018**
(21) Application number: 14190226.2
(22) Date of filing: 24.10.2014
(51) Int. Cl.: F16K 11/048

(54) **Three-way valve for flow mixing and flow division**
Dreiwegeventil zur Strommischung und Stromtrennung
Soupape à trois voies pour un mélange et une division de flux

(30) Priority: 31.12.2013 CN 201310751251
(43) Date of publication of application: 01.07.2015
(60) Divisional application: 17176288.3
(73) Proprietor: Danfoss A/S, 6430 Nordborg (DK)
(72) Inventor: Gao, Yu, 114041 Anshan (CN); Weng, Liang, 114041 Anshan (CN); Zang, Qi, 114041 Anshan (CN)

(56) References cited:
- WO-A1-2004/072520
- DE-A1- 2 134 272
- US-A- 1 172 833

## Description

### BACKGROUND

### Technical Field

The present invention relates to district heating, the petrochemical industry, the water processing industry, and the metallurgical industry, and in particular, to a three-way valve for implementing flow mixing and flow division and used in the foregoing application fields.

### Related Art

Currently, in a three-way valve in the prior art, flow mixing and flow division functions are implemented by changing an inner component of the valve. Changing an inner component of a valve is usually very troublesome, which is not beneficial for a client to use the valve.

Besides, a conventional three-way valve uses many driving apparatuses, and therefore, a driving force is reduced. To meet a requirement for strong flow resistance, the driving force usually needs to be increased. An increase in the driving force increases a parameter of an electric driving apparatus; consequently, the conventional three-way valve finally loses competitiveness on the market.

In addition, the size of the three-way valve is also increased, so as to increase a movement space and the like of a lower valve core to avoid a direct impact on a valve core by a medium or reducing the driving force. However, a large space is occupied, which causes inconvenience in installation and use.

In one prior art document DE 2 134 272 is disclosed a valve core component, wherein the valve core component is connected to the valve cover in a fixed manner, a valve seat component, wherein the valve seat component is provided inside the valve cavity and is capable of fitting with the valve core component, where a valve rod component is connected to the valve seat component, and drives the valve seat component to move up and down in the valve cavity, so as to implement a flow rate variation, and opening and closing one of the first or third ports of the three-way valve.

In view of this, it is necessary to provide a new three-way valve that at least can partially solve the foregoing problems.

### SUMMARY

An objective of the present invention is to solve at least one aspect of the foregoing problems and disadvantages that exist in the prior art.

One objective of the present invention is to provide a three-way valve, which can implement flow mixing and flow division functions without changing any component.

One objective of the present invention is to provide a three-way valve, which can reduce flow resistance.

Another objective of the present invention is to provide a three-way valve, which has a compact structure and saves an installation space.

In one aspect of the present invention, a three-way valve for flow mixing and flow division is provided, and the three-way valve includes:
a valve cover, where the bottom of the valve cover is provided with a first port connected to a valve cavity of the three-way valve; and
a valve body, where the valve body is connected to the valve cover in a sealed manner and is provided above the valve cover, and left and right sides of the valve body are provided with a second port and a third port that are connected to the valve cavity. The three-way valve further includes:
   a valve core component, where the valve core component is connected to the valve cover in a fixed manner;
   a valve seat component, where the valve seat component is provided inside the valve cavity and is capable of fitting with the valve core component; and
   a valve rod component, where the valve rod component is connected to the valve seat component, and drives the valve seat component to move up and down in the valve cavity, so as to implement a flow rate variation, and opening and closing of the three-way valve.

Specifically, the valve core component includes an upper valve core, a lower valve core, and a valve core connector connecting the upper valve core and the lower valve core.

Specifically, the three-way valve further comprises a support rod, where one end of the support rod is connected to a ring-shaped boss provided at the center of the lower valve core, and the other end is connected to a support member of the valve cover in a fixed manner.

Specifically, the ring-shaped boss is provided with an inner thread so as to be connected to a thread at one end of the support rod, the other end of the support rod is fixed on a support rib of the valve cover, and the support rib is provided with a fan-shaped flow channel opening for a medium to pass through.

Specifically, the valve seat component includes an upper valve seat and a lower valve seat that are connected to each other by using a connecting rod, and the upper valve seat and the lower valve seat are separately located above and below the valve core component.

Specifically, the connecting rod and the lower valve seat are connected by means of screw-thread fit, and the connecting rod and the upper valve seat are fastened by using a fastening nut.

Specifically, an inner side of an outer surface of the connecting rod contacts an outer edge of the valve core connector.

Specifically, an outer circumference of the valve core connector is provided with a semi-circular hole fitting with an inner surface of the connecting rod.

Specifically, quantities of the connecting rods and the semi-circular holes are both 6.

Specifically, the upper valve seat is connected to a valve rod in the valve rod component by using a connecting plate, and seal surfaces of the connecting plate and the upper valve seat are sealed by using a non-asbestos pad.

Specifically, the connecting plate is provided with a fan-shaped flow channel opening for a medium to pass through, the center of the connecting plate is provided with a through-hole, and after the valve rod penetrates the through-hole, a nut is used to fit with a thread at an end of the valve rod to implement fastening.

Specifically, two ends of the valve core connector are each provided with a groove, a seal ring is provided inside the groove, the upper valve core and the lower valve core are separately connected to the valve core connector in a threaded manner and tightly press an inner ring of the seal ring, an outer ring of the seal ring is exposed, and when the upper valve seat or the lower valve seat moves to press and be joined with the outer ring of the seal ring, the corresponding first port or second port is closed in a sealed manner.

Specifically, the seal ring is an O-shaped seal ring or an X-shaped seal ring.

Specifically, a partition plate of the valve body component and an inner wall of the valve cover are sealed by using a first O-shaped seal ring.

Specifically, a connection position between the partition plate and the inner wall is provided with a guiding groove, and a guiding ring is mounted inside the guiding groove.

Specifically, at a top end of the valve rod, a stuffing box and an insertion member that are connected by using a thread are sequentially provided between the valve body and the valve rod.

Specifically, seal surfaces of the stuffing box and the insertion member are provided with a second O-shaped seal ring, and a copper pad is provided inside the insertion member.

Specifically, outer contours of the upper valve core are formed such that a flow curve of the second port is a logarithmic curve, and/or outer contours of the lower valve core are formed such that a flow curve of the first port is a linear curve.

It can be known from the foregoing that the three-way valve provided in the present invention at least achieves the following beneficial technical effects: (1) flow mixing and flow division functions can be implemented by a single valve without changing any component, (2) a client installs and uses the valve more easily, and an installation space is saved, and (3) a structure design is simple, and a manufacturing cost is low.

### BRIEF DESCRIPTION OF THE DRAWINGS

These and/or other aspects and advantages of the present invention will become clear and easy to understand through the following description about preferred embodiments with reference to the accompanying drawings, where:
FIG. 1 is a sectional view of a three-way valve for flow mixing and flow division according to an embodiment of the present invention;
FIG. 2 is an enlarged schematic diagram of an example of a valve core component shown in FIG. 1;
FIG. 3 is an enlarged schematic diagram of another example of a valve core component shown in FIG. 1; and
FIG. 4 is a top view of a valve core connector in a valve core component shown in FIG. 1.

### DETAILED DESCRIPTION

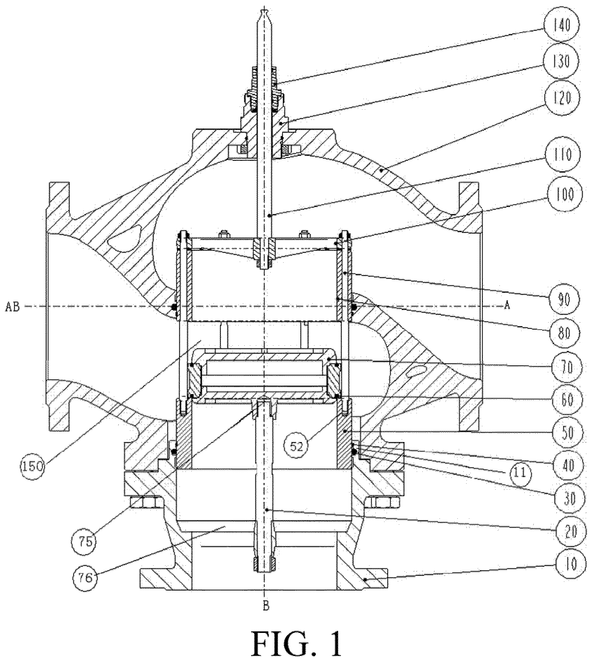

Technical solutions of the present invention are described in further detail through the following embodiments and with reference to FIG. 1 to FIG. 4. In this specification, same or similar reference numerals indicate same or similar components. The following description of implementation manners of the present invention with reference to the accompanying drawings is intended to explain the general invention conception of the present invention, and should not be construed as a limitation to the present invention.

As shown in FIG. 1, a three-way valve for flow mixing and flow division provided in an embodiment of the present invention sequentially includes the following components from bottom to top: a valve cover 10, a valve body 120, and a valve rod component. A support rod 20, valve seat components 50 and 80, and a valve core component 70 are sequentially provided from bottom to top inside a valve cavity 150 of the three-way valve. The bottom of the valve cover 10 is provided with a port B connected to the valve cavity 150 of the three-way valve. The valve body 120 extends along a left-right direction of a page where FIG. 1 is shown. The valve body 120 is connected to the valve cover 10 in a sealed manner and is provided above the valve cover 10. As shown in FIG. 1, left and right sides of the valve body 120 are separately provided with a port AB and a port A that are connected to the valve cavity 150. The valve core component 70 is connected to the valve cover 10 in a fixed manner. The valve seat components 50 and 80 are connected to one end of the valve rod component, and are driven by the valve rod component to move up and down inside the valve cavity 150, so as to connect with or disconnect from the valve core component, thereby finally implementing a flow rate variation, and opening and closing of the three-way valve.

When a medium flows from the port A and the port B to the three-way valve, as shown in FIG. 1, the medium at the port A reaches a maximum flow rate, the port B is in a closing state, and after passing through the valve cavity 150, the medium flows out from the port AB. When the valve seat components 50 and 80 move downwards, the port B gradually opens, and the port A gradually closes. This process implements a function of medium mixing or flow mixing. When the medium flows from the port AB to the three-way valve, as shown in FIG. 1, the medium at the port A reaches the maximum flow rate, and the port B is in a closing state. When the valve seat components 50 and 80 move downwards, the port B gradually opens, and the port A gradually closes. When the valve seat components 50 and 80 move downwards by the greatest stroke, the port A closes, and a flow rate at the port B reaches a maximum value. In this process, the three-way valve implements a function of medium separation or flow division.

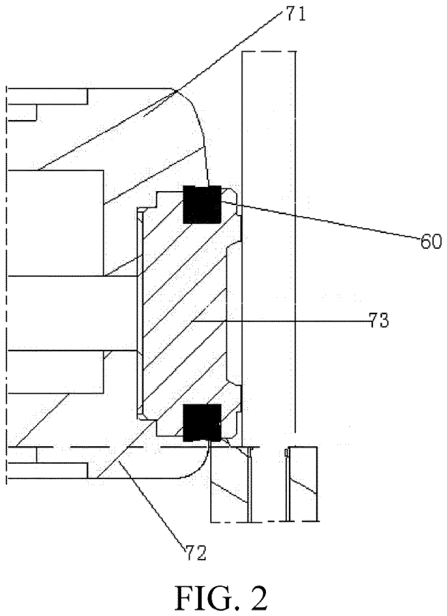

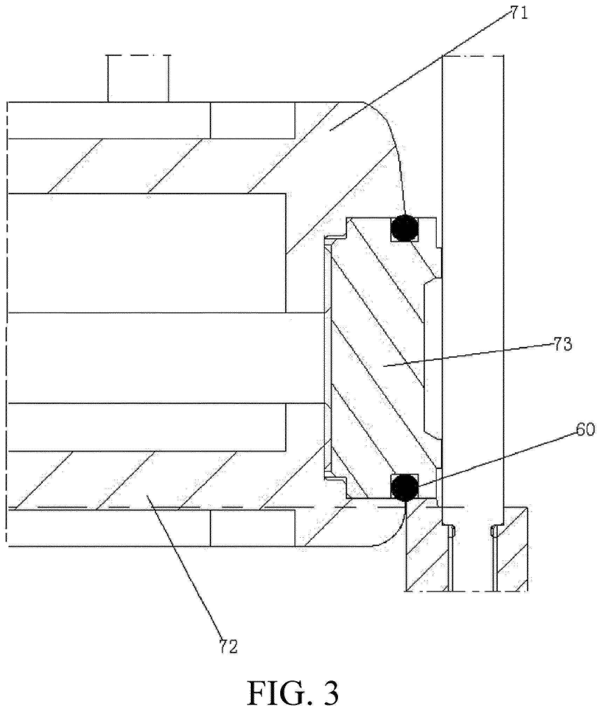

As shown in FIG. 2 and FIG. 3, the valve core component 70 includes an upper valve core 71, a lower valve core 72, and a valve core connector 73 connecting the upper valve core 71 and the lower valve core 72. One end of the support rod 20 is connected to a guiding hole 75 provided at the center of the lower valve core 72, and a step portion is provided inside the guiding hole 75 to fit with a protrusion at an upper end of the support rod 20. It can be seen that the guiding hole 75 enables the lower valve core 72, the support rod 20, and the valve cover 10 to meet a requirement of keeping coaxial. The other end of the support rod 20 is connected to a support member, such as a support rib 76, of the valve cover 10 in a fixed manner. The guiding hole 75 is provided with an inner thread so as to be connected to a thread at one end of the support rod 20, the other end of the support rod 20 is fixed on the support rib 76 of the valve cover 10, and the support rib 76 is provided with a fan-shaped flow channel opening (not shown) for a medium to pass through. In an embodiment, three support ribs 76 may be provided, and correspondingly, three fan-shaped flow channel openings are formed.

Certainly, a fixed connection manner of the valve core component 70 and the valve cover 10 is not limited to the foregoing description, and a person skilled in the art may perform specific setting as needed.

Referring to FIG. 2 and FIG. 3, upper and lower ends of the valve core connector 73 are each provided with a groove (not shown). A seal ring 60 is provided inside the groove. The upper valve core 71 and the lower valve core 72 may be separately connected to the valve core connector 73 by using a thread and tightly press an inner ring of the seal ring 60, and an outer ring of the seal ring 60 is exposed. When the upper valve seat 80 or the lower valve seat 50 moves to press and be joined with the outer ring of the seal ring 60, the corresponding port A or port B is closed in a sealed manner. Specifically, FIG. 2 is a partially enlarged sectional view in which the seal ring 60 is set as an X-shaped seal ring. FIG. 3 is a partially enlarged sectional view in which the seal ring 60 is set as an O-shaped seal ring. Certainly, a person skilled in the art may further select a seal ring of another type as actually needed.

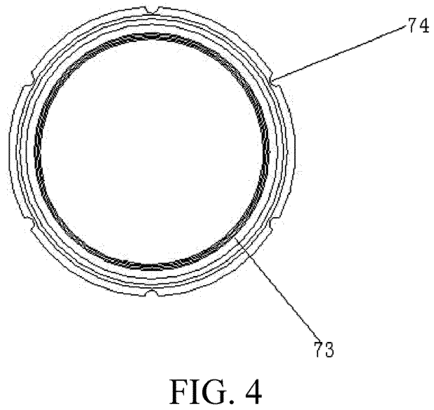

Referring to FIG. 1, the valve seat component includes an upper valve seat 80 and a lower valve seat 50 that are connected to each other by using a connecting rod 90, and the upper valve seat 80 and the lower valve seat 50 are separately located above and below the upper valve core 71 and the lower valve core 72 of the valve core component. It can be understood that when the upper valve seat 80 is joined with the upper valve core 71, the port A can be closed; and similarly, when the lower valve seat 50 is joined with the lower valve core 72, the port B can be closed. Specifically, an inner side of an outer surface of the connecting rod 90 contacts an outer edge of the valve core connector 73. Preferably, an outer circle or an outer circumference of the valve core connector 73 is provided with multiple (for example, six) semi-circular holes fitting with the connecting rod 90. As shown in FIG. 4, six semi-circular holes 74 having an equal space between each other are provided on the outer circle of the valve core connector 73 to accommodate a part of an inner surface of the connecting rod 90. It can be understood that in such deployment, when the valve core component 70 is impacted by a medium, the deployment can effectively prevent the valve core component 70 from shaking substantially.

Specifically, as shown in FIG. 1, to meet a location requirement of, for example, six connecting rods, and to achieve higher overall installation accuracy of the valve seat components 50 and 80, a lower end of the connecting rod 90 fits with a guiding hole 52 inside the valve seat 50. A step portion is provided inside the guiding hole 52, and is connected to the lower end of the connecting rod 90 by using a thread.

The valve rod component includes a valve rod 110, a stuffing box 140, and an insertion component 130. The upper valve seat 80 is connected to the valve rod 110 by using a connecting plate 100, and seal surfaces of the connecting plate 100 and the upper valve seat 80 are sealed by using a non-asbestos pad. The connecting plate 100 is provided with multiple (for example, three) fan-shaped flow channel openings for a medium to pass through. The center of the connecting plate 100 is provided with a through-hole, and after the valve rod 110 penetrates the through-hole, a nut is used to fit with a thread at an end of the valve rod 110 to implement fastening.

At a top end of the valve rod 110, the stuffing box 140 and the insertion part 130 that are connected by using a thread are sequentially provided between the valve body 120 and the valve rod 110. Seal surfaces of the stuffing box 140 and the insertion part 130 are provided with an O-shaped seal ring. Copper pads are provided inside the insertion part 130, and can prevent the stuffing box 140 from becoming loose when the valve shakes.

A partition plate of the valve body 120 and an inner wall of the valve cover 10 are sealed by using an O-shaped seal ring 30, thereby ensuring better sealing. A guiding groove 11 is provided at a connection position between the partition plate and the inner wall, and a guiding ring 40 is mounted in the guiding groove 11. The guiding groove 11 has desirable guiding and lubricating functions, so that the lower valve core 72 can move up and down vertically.

To achieve an objective of flow mixing and flow division, outer contours of the upper valve core 71 are formed such that a flow curve of the port A is a logarithmic curve, and outer contours of the lower valve core 72 are formed such that a flow curve of the port B is a linear curve. It can be understood that the foregoing setting is only an example of the present invention, and outer contours of the upper valve core and the lower valve core may also be configured in another manner.

Compared with the three-way valve in the prior art mentioned in the background of the present invention, the three-way valve in the present invention at least has one or more of the following advantages:
1) The three-way valve in the present invention can be used to mix and separate a medium. A user may select an installation manner in which the port A and the port B are mixing inlets or the port AB is a separation inlet as needed.
2) A valve body of the three-way valve in the present invention uses a valve body of a two-way valve in the prior art; therefore, the valve body has better replaceability.
3) Whether for medium separation or mixing, a structure of the three-way valve designed in the present invention reduces an impact of the medium on a valve rod by a maximum extent, thereby reducing a needed driving force. For example, when a liquid medium enters the valve body from the port AB, the valve rod and a valve seat are not directly impacted by the medium. Therefore, the needed driving force is relatively small, and the cost of a driving apparatus is relatively low. Besides, because a valve core component is connected to a valve cover in a fixed manner, the medium has a very small impact on a valve core.
4) When the three-way valve in the prior art is used for flow division, to prevent the medium from directly impacting or colliding with the valve core, and further impacting the valve rod, a lower valve core is usually set to be closer the port B (that is, a downside port) of the three-way valve. This requires the port B to have a large space to allow movement of the valve core. In comparison, because the valve core component is not connected to the valve rod in the present invention, impact of the medium on the valve core does not cause an increase in a driving force of the valve rod. A space of an inner cavity of the valve is efficiently used as a movement space of the valve seat. Therefore, an overall size of the three-way valve is relatively small, and an installation space is saved.

The foregoing is only some embodiments of the present invention, and a person of ordinary skill in the art will understand that modifications can be made to these embodiments without departing from the principle of the general invention conception. Therefore, the scope of the present invention is defined by the claims.

## Claims

1. A three-way valve for flow mixing and flow division, comprising:
a valve cover (10), wherein the bottom of the valve cover is provided with a first port (B) connected to a valve cavity (150) of the three-way valve; and
a valve body (120), wherein the valve body is connected to the valve cover in a sealed manner and is provided above the valve cover, and left and right sides of the valve body are provided with a second port (AB) and a third port (A) that are connected to the valve cavity;
the three-way valve further comprising:
a valve core component (70), wherein the valve core component is connected to the valve cover in a fixed manner;
a valve seat component (50, 80), wherein the valve seat component is provided inside the valve cavity and is capable of fitting with the valve core component; and
a valve rod component, wherein the valve rod component is connected to the valve seat component, and drives the valve seat component to move up and down in the valve cavity, so as to implement a flow rate variation, and opening and closing of the three-way valve,
the valve core component (70) comprises an upper valve core (71), a lower valve core (72), and a valve core connector (73) connecting the upper valve core and the lower valve core, **characterized in that**, said three-way valve further comprises a support rod (20), wherein one end of the support rod is connected to a ring-shaped boss provided at the center of the lower valve core, and the other end is connected to a support member (76) of the valve cover in a fixed manner.

2. The three-way valve according to claim 1, wherein
the ring-shaped boss is provided with an inner thread so as to be connected to a thread at one end of the support rod, the other end of the support rod is fixed on a support rib (76) of the valve cover, and the support rib is provided with a fan-shaped flow channel opening for a medium to pass through.

3. The three-way valve according to any one of claims 1 or 2, wherein
the valve seat component (50, 80) comprises an upper valve seat (80) and a lower valve seat (50) that are connected to each other by using a connecting rod (90), and the upper valve seat and the lower valve seat are separately located above and below the valve core component.

4. The three-way valve according to claim 3, wherein
the connecting rod (90) and the lower valve seat (50) are connected by means of screw-thread fit, and the connecting rod and the upper valve seat are fastened by using a fastening nut.

5. The three-way valve according to claim 4, wherein
an inner side of an outer surface of the connecting rod (90) contacts an outer edge of the valve core connector (73).

6. The three-way valve according to claim 5, wherein
an outer circumference of the valve core connector (73) is provided with a semi-circular hole fitting with an inner surface of the connecting rod.

7. The three-way valve according to claim 6, wherein
quantities of the connecting rods and the semi-circular holes are both 6.

8. The three-way valve according to any one of claims 3 to 7, wherein
the upper valve seat is connected to a valve rod (110) in the valve rod component by using a connecting plate (100), and seal surfaces of the connecting plate and the upper valve seat are sealed by using a non-asbestos pad.

9. The three-way valve according to claim 8, wherein
the connecting plate (100) is provided with a fan-shaped flow channel opening for a medium to pass through, the center of the connecting plate is provided with a through-hole, and after the valve rod (110) penetrates the through-hole, a nut is used to fit with a thread at an end of the valve rod to implement fastening.

10. The three-way valve according to claim 1, wherein
two ends of the valve core connector (73) are each provided with a groove, a seal ring (60) is provided inside the groove, the upper valve core and the lower valve core are separately connected to the valve core connector by using a thread and tightly press an inner ring of the seal ring, an outer ring of the seal ring is exposed, and when the upper valve seat or the lower valve seat moves to press and be joined with the outer ring of the seal ring, the corresponding first port or second port is closed in a sealed manner.

11. The three-way valve according to claim 10, wherein
the seal ring is an O-shaped seal ring or an X-shaped seal ring.

12. The three-way valve according to any one of claims 1 to 11, wherein
a partition plate of the valve body (120) and an inner wall of the valve cover (10) are sealed by using a first O-shaped seal ring.

13. The three-way valve according to claim 12, wherein
a connection position between the partition plate and the inner wall is provided with a guiding groove (11), and a guiding ring (40) is mounted inside the guiding groove.

14. The three-way valve according to claim 13, wherein
at a top end of the valve rod, a stuffing box (140) and an insertion part (130) that are connected by using a thread are sequentially provided between the valve body and the valve rod.

15. The three-way valve according to claim 14, wherein
seal surfaces of the stuffing box and the insertion part are provided with a second O-shaped seal ring, and a copper pad is provided inside the insertion part.

16. The three-way valve according to any one of claims 1 to 15, wherein
outer contours of the upper valve core are formed such that a flow curve of the second port is a logarithmic curve, and/or outer contours of the lower valve core are formed such that a flow curve of the first port is a linear curve.

## Patentansprüche

1. Dreiwegeventil für das Mischen und Teilen von Strömen, umfassend:
eine Ventilabdeckung (10), wobei der Boden der Ventilabdeckung mit einem ersten Anschluss (B) versehen ist, der mit einem Ventilhohlraum (150) des Dreiwegeventils verbunden ist, und
einen Ventilkörper (120), wobei der Ventilkörper mit der Ventilabdeckung abgedichtet verbunden ist und oberhalb der Ventilabdeckung bereitgestellt ist und eine linke und eine rechte Seite des Ventilkörpers mit einem zweiten Anschluss (AB) und einem dritten Anschluss (A) versehen sind, die mit dem Ventilhohlraum verbunden sind,
wobei das Dreiwegeventil ferner Folgendes umfasst:
eine Ventilkernkomponente (70), wobei die Ventilkernkomponente mit der Ventilabdeckung fest verbunden ist,
eine Ventilsitzkomponente (50, 80), wobei die Ventilsitzkomponente innerhalb des Ventilhohlraums bereitgestellt ist und in der Lage ist, sich mit der Ventilkernkomponente zusammenzufügen, und
eine Ventilstangenkomponente, wobei die Ventilstangenkomponente mit der Ventilsitzkomponente verbunden ist und die Ventilsitzkomponente antreibt, um sich im Ventilhohlraum auf und ab zu bewegen, um eine Volumenstromänderung sowie Öffnen und Schließen des Dreiwegeventils umzusetzen,
die Ventilkernkomponente (70) einen oberen Ventilkern (71), einen unteren Ventilkern (72) und ein Ventilkern-Verbindungsstück (73) umfasst, welches den oberen Ventilkern und den unteren Ventilkern verbindet, **dadurch gekennzeichnet, dass** das Dreiwegeventil ferner eine Tragstange (20) umfasst, wobei ein Ende der Tragstange mit einem in der Mitte des unteren Ventilkerns bereitgestellten ringförmigen Auge verbunden ist und das andere Ende fest mit einem Tragelement (76) der Ventilabdeckung verbunden ist.

2. Dreiwegeventil nach Anspruch 1, wobei
das ringförmige Auge mit einem Innengewinde versehen ist, um mit einem Gewinde an einem Ende der Tragstange verbunden zu werden, das andere Ende der Tragstange auf einer Tragrippe (76) der Ventilabdeckung fixiert ist und die Tragrippe mit einer fächerförmigen Strömungskanalöffnung für ein hindurchströmendes Medium versehen ist.

3. Dreiwegeventil nach einem der Ansprüche 1 oder 2, wobei
die Ventilsitzkomponente (50, 80) einen oberen Ventilsitz (80) und einen unteren Ventilsitz (50) umfasst, die unter Verwendung einer Verbindungsstange (90) miteinander verbunden sind, und sich der obere Ventilsitz und der untere Ventilsitz separat oberhalb und unterhalb der Ventilkernkomponente befinden.

4. Dreiwegeventil nach Anspruch 3, wobei
die Verbindungsstange (90) und der untere Ventilsitz (50) mittels einer Schraubgewindeverbindung verbunden sind und die Verbindungsstange und der obere Ventilsitz unter Verwendung einer Befestigungsmutter befestigt sind.

5. Dreiwegeventil nach Anspruch 4, wobei
eine Innenseite einer Außenfläche der Verbindungsstange (90) eine Außenkante des Ventilkern-Verbindungsstücks (73) kontaktiert.

6. Dreiwegeventil nach Anspruch 5, wobei
ein Außenumfang des Ventilkern-Verbindungsstücks (73) mit einer halbkreisförmigen Öffnung versehen ist, die sich mit einer Innenfläche der Verbindungsstange zusammenfügt.

7. Dreiwegeventil nach Anspruch 6, wobei
die Anzahl der Verbindungsstangen und der halbkreisförmigen Öffnungen in beiden Fällen 6 beträgt.

8. Dreiwegeventil nach einem der Ansprüche 3 bis 7, wobei
der obere Ventilsitz unter Verwendung einer Verbindungsplatte (100) mit einer Ventilstange (110) in der Ventilstangenkomponente verbunden ist und Dichtflächen der Verbindungsplatte und des oberen Ventilsitzes unter Verwendung eines asbestfreien Passstücks abgedichtet sind.

9. Dreiwegeventil nach Anspruch 8, wobei
die Verbindungsplatte (100) mit einer fächerförmigen Strömungskanalöffnung für ein hindurchströmendes Medium versehen ist, die Mitte der Verbindungsplatte mit einer Durchgangsbohrung versehen ist und nach dem Durchtritt der Ventilstange (110) durch die Durchgangsbohrung eine Mutter verwendet wird, um sich mit einem Gewinde an einem Ende der Ventilstange zusammenzufügen, um eine Befestigung herzustellen.

10. Dreiwegeventil nach Anspruch 1, wobei
zwei Enden des Ventilkern-Verbindungsstücks (73) jeweils mit einer Nut versehen sind, innerhalb der Nut ein Dichtring (60) bereitgestellt ist, der obere Ventilkern und der untere Ventilkern unter Verwendung eines Gewindes separat mit dem Ventilkern-Verbindungsstück verbunden sind und dicht gegen einen Innenring des Dichtrings drücken, ein Außenring des Dichtrings freiliegt, und wenn sich der obere Ventilsitz oder der untere Ventilsitz so bewegt, dass er gegen den Außenring drückt und sich mit diesem aneinanderfügt, der entsprechende erste Anschluss oder zweite Anschluss abgedichtet verschlossen ist.

11. Dreiwegeventil nach Anspruch 10, wobei
es sich bei dem Dichtring um einen O-förmigen oder einen X-förmigen Dichtring handelt.

12. Dreiwegeventil nach einem der Ansprüche 1 bis 11, wobei eine Trennplatte des Ventilkörpers (120) und eine Innenwand der Ventilabdeckung (10) unter Verwendung eines ersten O-förmigen Dichtrings abgedichtet sind.

13. Dreiwegeventil nach Anspruch 12, wobei
eine Verbindungsposition zwischen der Trennplatte und der Innenwand mit einer Führungsnut (11) versehen ist und ein Führungsring (40) innerhalb der Führungsnut gelagert ist.

14. Dreiwegeventil nach Anspruch 13, wobei
an einem oberen Ende der Ventilstange eine Stopfbuchse (140) und ein Einsatzstück (130), die unter Verwendung eines Gewindes verbunden sind, nacheinander zwischen dem Ventilkörper und der Ventilstange bereitgestellt sind.

15. Dreiwegeventil nach Anspruch 14, wobei
Dichtflächen der Stopfbuchse und des Einsatzstücks mit einem zweiten O-förmigen Dichtring versehen sind und ein Kupferpassstück innerhalb des Einsatzstücks bereitgestellt ist.

16. Dreiwegeventil nach einem der Ansprüche 1 bis 15, wobei
Außenumrisse des oberen Ventilkerns so ausgebildet sind, dass eine Fließkurve des zweiten Anschlusses eine logarithmische Kurve ist, und/oder Außenumrisse des unteren Ventilkerns so ausgebildet sind, dass eine Fließkurve des ersten Anschlusses eine lineare Kurve ist.

## Revendications

1. Vanne à trois voies pour mélange d'écoulement et division d'écoulement, comprenant :
un couvercle de vanne (10), dans laquelle le fond du couvercle de vanne est pourvu d'un premier orifice (B) raccordé à une cavité de vanne (150) de la vanne à trois voies ; et
un corps de vanne (120), dans laquelle le corps de vanne est raccordé au couvercle de vanne de manière étanche et est prévu au-dessus du couvercle de vanne, et des côtés gauche et droit du corps de vanne sont pourvus d'un deuxième orifice (AB) et d'un troisième orifice (A) qui sont raccordés à la cavité de vanne ;
la vanne à trois voies comprenant en outre :
un composant noyau de vanne (70), dans laquelle le composant noyau de vanne est raccordé au couvercle de vanne de manière fixe ;
un composant siège de vanne (50, 80), dans laquelle le composant siège de vanne est prévu à l'intérieur de la cavité de vanne et est capable de s'ajuster avec le composant noyau de vanne ; et
un composant tige de vanne, dans laquelle le composant tige de vanne est raccordé au composant siège de vanne, et entraîne le composant siège de vanne pour qu'il se déplace vers la haut et vers le bas dans la cavité de vanne, afin d'effectuer une variation de débit, et une ouverture et une fermeture de la vanne à trois voies,
le composant noyau de vanne (70) comprend un noyau de vanne supérieur (71), un noyau de vanne inférieur (72), et un raccord de noyau de vanne (73) raccordant le noyau de vanne supérieur et le noyau de vanne inférieur, **caractérisée en ce que** ladite vanne à trois voies comprend en outre une tige de support (20), dans laquelle une extrémité de la tige de support est raccordée à un bossage de forme annulaire prévu au centre du noyau de vanne inférieur, et l'autre extrémité est raccordée à un organe de support (76) du couvercle de vanne de manière fixe.

2. Vanne à trois voies selon la revendication 1, dans laquelle
le bossage de forme annulaire est pourvu d'un filet intérieur afin d'être raccordé à un filet à une extrémité de la tige de support, l'autre extrémité de la tige de support est fixée sur une nervure de support (76) du couvercle de vanne, et la nervure de support est pourvue d'une ouverture de canal d'écoulement en forme d'éventail pour qu'une matière passe à travers.

3. Vanne à trois voies selon l'une quelconque des revendications précédentes 1 ou 2, dans laquelle
le composant siège de vanne (50, 80) comprend un siège de vanne supérieur (80) et un siège de vanne inférieur (50) qui sont raccordés l'un à l'autre en utilisant une tige de raccordement (90), et le siège de vanne supérieur et le siège de vanne inférieur sont séparément situés au-dessus et en dessous du composant noyau de vanne.

4. Vanne à trois voies selon la revendication 3, dans laquelle
la tige de raccordement (90) et le siège de vanne inférieur (50) sont raccordés au moyen d'ajustement par filetage de vis, et la tige de raccordement et le siège de vanne supérieur sont fixés en utilisant un écrou de fixation.

5. Vanne à trois voies selon la revendication 4, dans laquelle
un côté intérieur d'une surface extérieure de la tige de raccordement (90) entre en contact avec un bord extérieur du raccord de noyau de vanne (73).

6. Vanne à trois voies selon la revendication 5, dans laquelle
une circonférence extérieure du raccord de noyau de vanne (73) est pourvue d'un trou semi-circulaire s'ajustant avec une surface intérieure de la tige de raccordement.

7. Vanne à trois voies selon la revendication 6, dans laquelle
la quantité des tiges de raccordement et la quantité des trous semi-circulaires sont toutes les deux 6.

8. Vanne à trois voies selon l'une quelconque des revendications précédentes 3 à 7, dans laquelle
le siège de vanne supérieur est raccordé à une tige de vanne (110) dans la tige de vanne de composant en utilisant une plaque de raccordement (100), et des surfaces d'étanchéité de la plaque de raccordement et du siège de vanne supérieur sont rendues étanches en utilisant un tampon autre qu'en amiante.

9. Vanne à trois voies selon la revendication 8, dans laquelle
la plaque de raccordement (100) est pourvue d'une ouverture de canal d'écoulement en forme d'éventail pour qu'une matière passe à travers, le centre de la plaque de raccordement est pourvu d'un trou débouchant, et, après que la tige de vanne (110) pénètre dans le trou débouchant, un écrou est utilisé pour s'ajuster avec un filet à une extrémité de la tige de vanne pour effectuer la fixation.

10. Vanne à trois voies selon la revendication 1, dans laquelle
deux extrémités du raccord de noyau de vanne (73) sont, chacune, pourvues d'une rainure, une bague d'étanchéité (60) est prévue à l'intérieure de la rainure, le noyau de vanne supérieur et le noyau de vanne inférieur sont séparément raccordés au raccord de noyau de vanne en utilisant un filet et pressent fermement une bague intérieure de la bague d'étanchéité, une bague extérieure de la bague d'étanchéité est exposée, et, lorsque le siège de vanne supérieur ou le siège de vanne inférieur se déplace pour presser et être joint à la bague extérieure de la bague d'étanchéité, le premier orifice ou deuxième orifice correspondant est fermé de manière étanche.

11. Vanne à trois voies selon la revendication 10, dans laquelle la bague d'étanchéité est une bague d'étanchéité en forme de 0 ou une bague d'étanchéité en forme de X.

12. Vanne à trois voies selon l'une quelconque des revendications précédentes 1 à 11, dans laquelle une plaque de séparation du corps de vanne (120) et une paroi intérieure du couvercle de vanne (10) sont rendues étanches en utilisant une première bague d'étanchéité en forme de 0.

13. Vanne à trois voies selon la revendication 12, dans laquelle
une position de raccordement entre la plaque de séparation et la paroi intérieure est pourvue d'une rainure de guidage (11), et une bague de guidage (40) est montée à l'intérieur de la rainure de guidage.

14. Vanne à trois voies selon la revendication 13, dans laquelle
à l'extrémité supérieure de la tige de vanne, une boîte à étoupe (140) et une partie d'insertion (130) qui sont raccordées en utilisant un filet sont séquentiellement prévues entre le corps de vanne et la tige de vanne.

15. Vanne à trois voies selon la revendication 14, dans laquelle
des surfaces d'étanchéité de la boîte à étoupe et de la partie d'insertion sont pourvues d'une seconde bague d'étanchéité en forme de 0, et un tampon en cuivre est prévu à l'intérieur de la partie d'insertion.

16. Vanne à trois voies selon l'une quelconque des revendications 1 à 15, dans laquelle
des contours extérieurs du noyau de vanne supérieur sont formés de telle sorte qu'une courbe d'écoulement du second orifice soit une courbe logarithmique, et/ou des contours extérieurs du noyau de vanne inférieur sont formés de telle sorte qu'une courbe d'écoulement du premier orifice soit une courbe linéaire.
